# EUROPEAN PATENT APPLICATION

(11) **EP 4 760 706 A1**
(43) Date of publication of application: **17.06.2026**
(21) Application number: 25214919.0
(22) Date of filing: 11.11.2025
(51) Int. Cl.: G10H 1/00, G10H 1/32

(54) **SENSOR MODULE FOR ELECTRONIC WIND INSTRUMENT, ELECTRONIC WIND INSTRUMENT, AND DETECTION METHOD FOR EXHALED AIR**

(30) Priority: 12.12.2024 JP 2024218224
(71) Applicant: Roland Corporation, Hamamatsu-shi, Shizuoka 431-1304 (JP)
(72) Inventor: SATO, Hitoshi, Shizuoka, 431-1304 (JP); YAEGASHI, Rin, Shizuoka, 431-1304 (JP); MORI, Kentaro, Shizuoka, 431-1304 (JP); SHIMIZU, Masato, Shizuoka, 431-1304 (JP)
(74) Representative: Becker, Eberhard

(57) **Abstract**

A sensor module (Sa, Sb) for electronic wind instrument of the disclosure includes a main flow path (314a, 315a, 323, 326, 355) positioned between an air inlet (310, 311) and an exhaust port (334, 335) for exhaled air formed on an outer surface of a housing (32, 33) of an electronic wind instrument (1, 201); a branch flow path (356, 380) branching to intersect with the main flow path; and a sensor (360, 363) positioned in the branch flow path and detecting changes in airflow in the branch flow path caused by changes in exhaled air flowing in the main flow path. A cross-sectional area of a first opening (356a, 380a) of the branch flow path formed at a connection portion between the main flow path and the branch flow path is smaller than a cross-sectional area of the main flow path at the connection portion.

## Description

### BACKGROUND

### Technical Field

The disclosure relates to a sensor module for electronic wind instrument, an electronic wind instrument, and a detection method for exhaled air, and particularly relates to a sensor module for electronic wind instrument, an electronic wind instrument, and a detection method for exhaled air that are capable of accurately detecting exhaled air.

### Description of Related Art

For example, Patent Document 1 describes an electronic wind instrument in which an area partitioning member E is incorporated inside a tube body P that has a mouthpiece 1. The area partitioning member E is formed with a first breath introduction area 4 and a second breath introduction area 5 that extend from the mouthpiece 1 to two sides in the axial direction of the tube body P, and the first and second breath introduction areas 4 and 5 have pressure sensors 8 and 9 that detect exhaled air blown into the mouthpiece 1.

Since the pressure sensors 8 and 9 are positioned at the end portions in the axial direction of the first and second breath introduction areas 4 and 5, it is possible to suppress exhaled air of the performer from being directly blown onto the pressure sensors 8 and 9. Therefore, it is possible to suppress saliva contained in the exhaled air from adhering to the pressure sensors 8 and 9, thereby making it possible to suppress deterioration of the detection accuracy of the pressure sensors 8 and 9 for exhaled air.

### Related Art Document

### Patent Document

[Patent Document 1] Japanese Patent Application Laid-Open No. 2010-262077 (for example, paragraphs 0009 to 0013 and FIG. 1 to FIG. 3)

### SUMMARY

### Technical Problem

However, the performer's exhaled air includes not only saliva but also humidity. For this reason, when exhaled air containing humidity flows to the side of the pressure sensors 8 and 9, moisture generated by condensation may adhere to the pressure sensors 8 and 9 even in the related art described above. Therefore, there has been a problem that the detection accuracy of the pressure sensors 8 and 9 for exhaled air may not be sufficiently improved.

The disclosure has been made to solve the above-described problem, and an objective thereof is to provide a sensor module for electronic wind instrument, an electronic wind instrument, and a detection method for exhaled air that are capable of improving the detection accuracy for exhaled air.

### Solution to Problem

To achieve the above objective, a sensor module for electronic wind instrument according to the disclosure includes a main flow path positioned between an air inlet and an exhaust port for exhaled air formed on an outer surface of a housing of an electronic wind instrument; a branch flow path branching to intersect with the main flow path; and a sensor positioned in the branch flow path and detecting changes in airflow in the branch flow path caused by changes in exhaled air flowing in the main flow path, in which a cross-sectional area of a first opening of the branch flow path formed at a connection portion between the main flow path and the branch flow path is smaller than a cross-sectional area of the main flow path at the connection portion.

An electronic wind instrument according to the disclosure includes a housing having an air inlet and an exhaust port for exhaled air formed on an outer surface, and the sensor module according to the disclosure is positioned in the housing.

A detection method for exhaled air according to the disclosure is provided for an electronic wind instrument, which includes a housing having an air inlet and an exhaust port for exhaled air formed on an outer surface, a main flow path positioned between the air inlet and the exhaust port of the housing, a branch flow path branching to intersect with the main flow path, and a sensor positioned in the branch flow path. The detection method for exhaled air includes setting a cross-sectional area of a first opening of the branch flow path formed at a connection portion between the main flow path and the branch flow path to be smaller than a cross-sectional area of the main flow path at the connection portion; and detecting, by the sensor, changes in airflow in the branch flow path caused by changes in exhaled air flowing in the main flow path.

### BRIEF DESCRIPTION OF THE DRAWINGS

FIG. 1A is a perspective view of the electronic wind instrument of the first embodiment.
FIG. 1B is a partially enlarged perspective view of the electronic wind instrument showing a state in which the instrument body is disassembled.
FIG. 2 is an exploded perspective view of the air inlet unit.
FIG. 3A is a perspective view of the lip plate viewed from the inner circumferential side.
FIG. 3B is a partially enlarged cross-sectional view of the air inlet unit.
FIG. 4 is a partially enlarged cross-sectional view of the air inlet unit taken along line IV-IV of FIG. 3B.
FIG. 5A is a partially enlarged cross-sectional view of the air inlet unit taken along line Va-Va of FIG. 4.
FIG. 5B is a partially enlarged cross-sectional view of the air inlet unit taken along line Vb-Vb of FIG. 4.
FIG. 6 is a partially enlarged cross-sectional view of the electronic wind instrument of the second embodiment.

### DESCRIPTION OF THE EMBODIMENTS

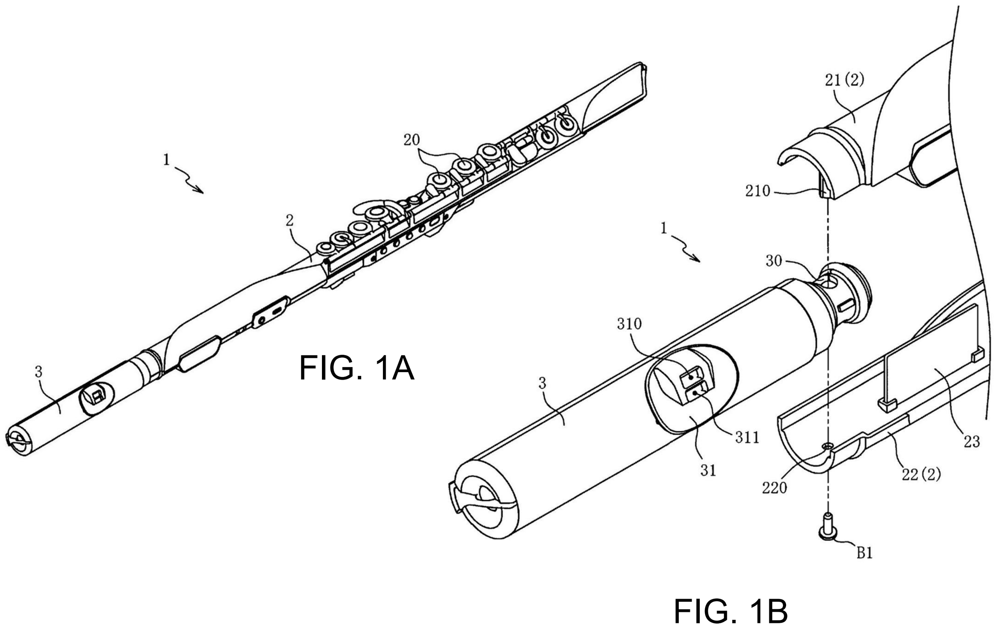

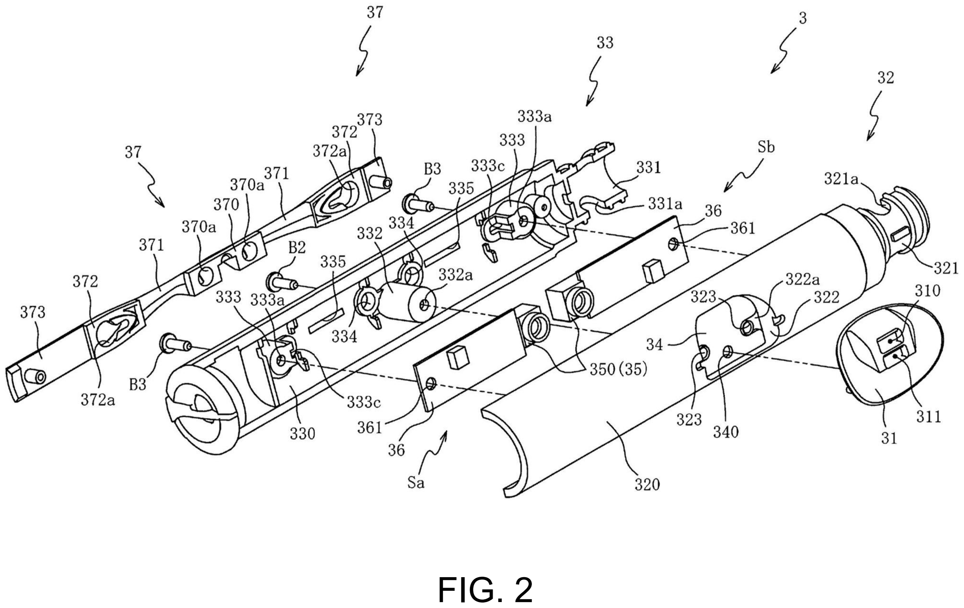

Hereinafter, preferred embodiments will be described with reference to the accompanying drawings. First, with reference to FIG. 1A to FIG. 2, the overall configuration of the electronic wind instrument 1 of the first embodiment will be described. FIG. 1A is a perspective view of the electronic wind instrument 1 of the first embodiment, and FIG. 1B is a partially enlarged perspective view of the electronic wind instrument 1 showing a state in which the instrument body 2 is disassembled. FIG. 2 is an exploded perspective view of the air inlet unit 3. It is noted that, in the following description, a direction orthogonal to the axial direction (longitudinal direction) of the electronic wind instrument 1 is described as the radial direction, and a direction around the axis is described as the circumferential direction.

As shown in FIG. 1A and FIG. 1B, the electronic wind instrument 1 is an electronic musical instrument that imitates an acoustic wind instrument (in this embodiment, a flute). The electronic wind instrument 1 includes an instrument body 2 that imitates a main tube of a flute, and an air inlet unit 3 that imitates a head joint is mounted to an end portion in the axial direction of the instrument body 2.

The instrument body 2 includes substantially semi-cylindrical upper housing 21 (first housing) and lower housing 22 (second housing), and multiple keys 20 are mounted to an outer circumferential surface of the upper housing 21. A columnar protrusion 210 is integrally formed at an end portion of the upper housing 21 on the air inlet unit 3 side in the axial direction. The protrusion 210 protrudes from an inner circumferential surface of the upper housing 21 toward the lower housing 22, and an insertion hole 220 for passing a bolt B1 is formed in the lower housing 22 at a position corresponding to a tip end of the protrusion 210.

An insertion hole 30 for inserting the protrusion 210 of the upper housing 21 is formed at an end portion of the air inlet unit 3 on the instrument body 2 side in the axial direction, and a female thread hole (not shown) is formed at the tip end of the protrusion 210 of the upper housing 21. The air inlet unit 3 is mounted to the instrument body 2 by screwing a bolt B1 passing through the insertion hole 220 into the protrusion 210 in a state in which the protrusion 210 of the upper housing 21 is inserted into the insertion hole 30 of the air inlet unit 3.

A lip plate 31 is mounted to an outer circumferential surface of the air inlet unit 3, and an upper air inlet 310 (first air inlet) and a lower air inlet 311 (second air inlet) are formed in the lip plate 31 and arranged side by side in a circumferential direction. Each of these air inlets 310 and 311 is a rectangular opening formed to be horizontally long in the axial direction of the air inlet unit 3. Performance of the electronic wind instrument 1 is carried out by the performer switching the blowing direction of exhaled air to each air inlet 310 and 311 (blowing separately) while operating the keys 20.

Electronic components such as a substrate 23 are housed in an internal space surrounded by the housings 21 and 22 of the instrument body 2. A CPU is positioned on the substrate 23, and musical sounds are generated based on the operation state of the keys 20 and the exhaled air blowing state (blowing amount) to each air inlet 310 and 311 by musical sound generation processing executed by this CPU.

As shown in FIG. 2, the air inlet unit 3 includes a substantially semi-cylindrical air inlet side housing 32 (third housing) and an exhaust side housing 33 (fourth housing). Each of these housings 32 and 33 is a resin component that includes a large diameter portion 320 and 330 having a relatively large diameter, and a small diameter portion 321 and 331 formed on one end side in the axial direction of the large diameter portion 320 and 330 and having a smaller diameter than the large diameter portion 320 and 330.

The large diameter portion 320 and the small diameter portion 321 of the air inlet side housing 32 are integrally formed, and similarly, the exhaust side housing 33 also has the large diameter portion 330 and the small diameter portion 331 integrally formed. Semi-elliptical notches 321a and 331a are formed at two end portions in the circumferential direction of the small diameter portions 321 and 331 of the housings 32 and 33, respectively, and by stacking the housings 32 and 33 together, the above-mentioned insertion hole 30 (see FIG. 1B) is formed.

A mounting hole 322 for mounting the lip plate 31 is formed in the large diameter portion 320 of the air inlet side housing 32, and a substrate 34 is sandwiched between a bottom surface 322a of this mounting hole 322 and the lip plate 31. The substrate 34 is for heating the lip plate 31 to remove moisture, and details of the configuration related to this heating will be described later.

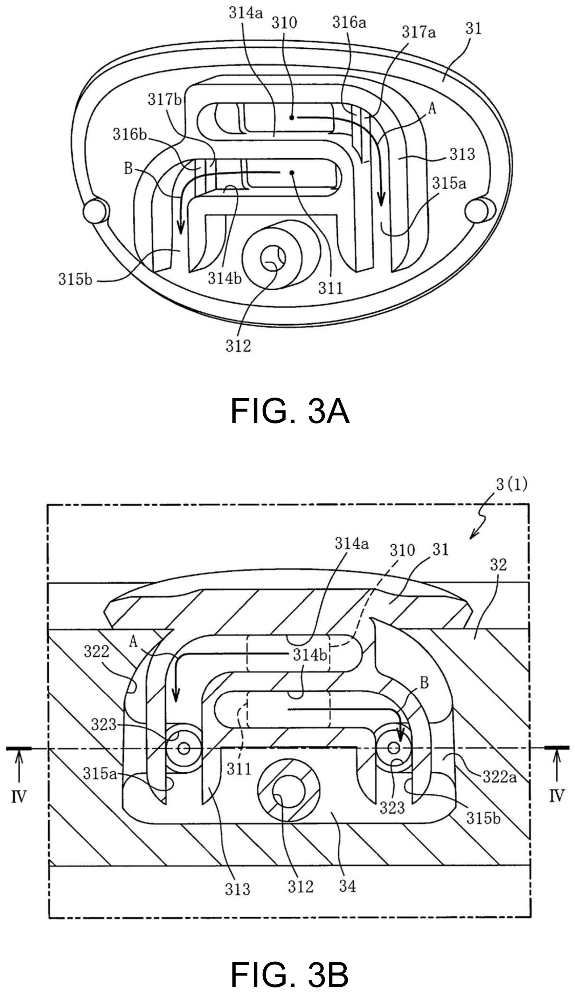

A boss 332 for fixing the lip plate 31 is integrally formed on an inner circumferential surface of the large diameter portion 330 of the exhaust side housing 33. The boss 332 is a cylindrical protrusion that rises from the inner circumferential surface of the large diameter portion 330 toward the air inlet side housing 32 side. An insertion hole 332a for inserting a bolt B2 is formed at the center of the boss 332, and a similar insertion hole 340 is also formed in the substrate 34 (bottom surface 322a of the mounting hole 322). By screwing the bolt B2 inserted into the insertion holes 332a and 340 of the boss 332 and the substrate 34 into a female thread hole 312 (see FIG. 3B) of the lip plate 31, the lip plate 31 is fixed to the mounting hole 322 (outer circumferential surface) of the air inlet side housing 32.

Housing side flow paths 323 for passing exhaled air blown from the air inlets 310 and 311 are formed on the bottom surface 322a of the mounting hole 322. The housing side flow paths 323 are formed as a pair spaced apart in an axial direction of the air inlet side housing 32 (air inlet unit 3). The exhaled air that has passed through this pair of housing side flow paths 323 is introduced into a pair of sensor modules Sa and Sb.

The pair of sensor modules Sa and Sb are arranged symmetrically with a plane orthogonal to the axial direction of the air inlet unit 3 (a plane including the air inlets 310 and 311) as a plane of symmetry (hereinafter, such symmetry is simply referred to as "symmetrical"). The sensor module Sa detects exhaled air blown into the upper air inlet 310, and the sensor module Sb detects exhaled air blown into the lower air inlet 311. The sensor modules Sa and Sb are identical components, respectively, and include a resin case 35 and a substrate 36 mounted to the case 35 by adhesion or the like.

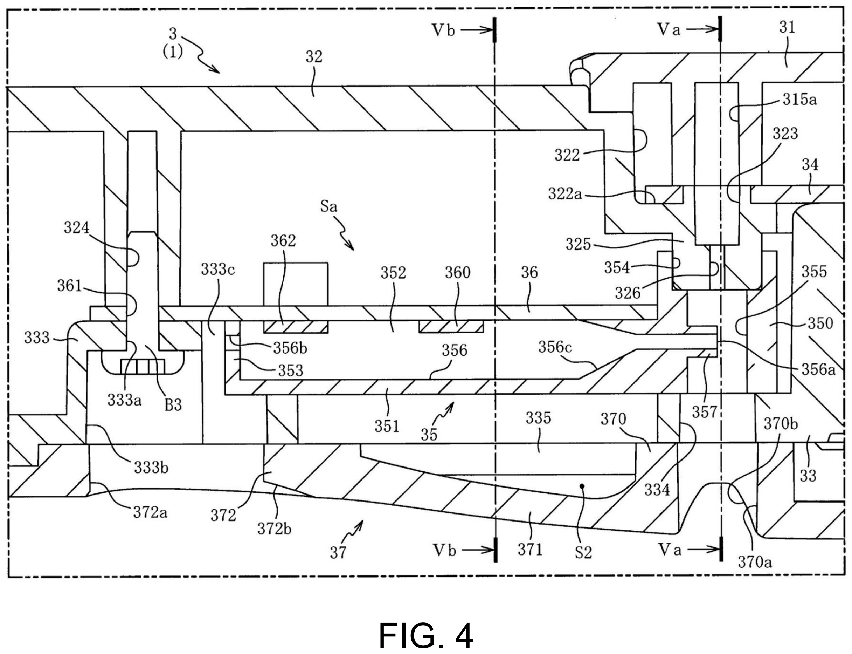

Each case 35 of the sensor modules Sa and Sb is formed with a cylindrical cylinder portion 350 through which exhaled air blown from the air inlets 310 and 311 passes, and the exhaled air that has passed through this cylinder portion 350 is detected by a temperature sensor 360 (see FIG. 4) positioned on the substrate 36. Details of this exhaled air detection method will be described later.

Bosses 333 for fixing the pair of sensor modules Sa and Sb are integrally formed on the inner circumferential surface at two ends side in the axial direction of the exhaust side housing 33. The boss 333 is a cylindrical protrusion that rises toward the air inlet side housing 32 side, and an insertion hole 333a for passing a bolt B3 is formed at the center of the boss 333.

A similar insertion hole 361 is formed at an end portion of the substrate 36 on the opposite side from the cylinder portion 350 in the axial direction, and a female thread hole 324 (see FIG. 4) is formed on the inner circumferential surface of the air inlet side housing 32 at a position corresponding to the boss 333 (insertion hole 333a). By screwing the bolt B3 inserted into the insertion holes 333a and 361 of the boss 333 and the substrate 36 into the female thread hole 324 of the air inlet side housing 32, the sensor modules Sa and Sb are fixed inside the air inlet unit 3.

In this fixed state, the cylinder portion 350 of the sensor modules Sa and Sb and the first exhaust port 334 of the exhaust side housing 33 communicate with each other. The first exhaust ports 334 are formed in a pair with an interval in the axial direction (with the boss 332 interposed therebetween), and exhaled air blown into the air inlets 310 and 311 is mainly discharged from these first exhaust ports 334. A pair of second exhaust ports 335 are formed on two sides in the axial direction of the pair of first exhaust ports 334. Each of these exhaust ports 334 and 335 is a hole that penetrates the large diameter portion 330 of the exhaust side housing 33, the first exhaust port 334 is formed in a circular shape, and the second exhaust port 335 is formed in a rectangular shape that is long in the axial direction.

Each exhaust port 334 and 335 is covered by a decorative body 37 (covering member) that extends in the axial direction. The decorative body 37 includes a first covering portion 370 that covers the first exhaust port 334, and a through hole 370a is formed in the first covering portion 370 at a position corresponding to the first exhaust port 334. A pair of second covering portions 371 that cover the pair of second exhaust ports 335 are positioned on two sides in the axial direction of the first covering portion 370, and a pair of third covering portions 372 are positioned on two sides in the axial direction of the pair of second covering portions 371.

The third covering portion 372 is a portion that covers a recess portion 333b (see FIG. 4) formed on the outer circumferential surface of the exhaust side housing 33 by the boss 333, and a through hole 372a is formed in the third covering portion 372 at a position corresponding to the recess portion 333b. A pair of fixed portions 373 are positioned on two sides in the axial direction of the pair of third covering portions 372, and the pair of fixed portions 373 are fixed to the outer circumferential surface of the exhaust side housing 33 (large diameter portion 330) by bolts (not shown).

Each portion 370 to 373 constituting the decorative body 37 is integrally formed using a resin material. By covering each exhaust port 334 and 335 and recess portion 333b (see FIG. 4) with each portion 370 to 373 of the decorative body 37, the appearance of the electronic wind instrument 1 may be improved.

Next, with reference to FIG. 2 to FIG. 3B, the flow path of exhaled air from each air inlet 310 and 311 to the pair of housing side flow paths 323 will be described. FIG. 3A is a perspective view of the lip plate 31 viewed from the inner circumferential side, and FIG. 3B is a partially enlarged cross-sectional view of the air inlet unit 3 (electronic wind instrument 1). FIG. 3B shows a cross-section taken along a plane that is orthogonal to the blowing direction of exhaled air into the air inlets 310 and 311 by the performer (radial direction of the air inlet side housing 32) and includes the barrier wall 313 of the lip plate 31.

It is noted that FIG. 3B is a cross-sectional view that does not include each air inlet 310 and 311 or restricted walls 317a and 317b (see FIG. 3A), but in FIG. 3B, the positions where the air inlets 310 and 311 are formed are shown by broken lines. Further, in the following description, the side of each air inlet 310 and 311 is referred to as the upstream side of the exhaled air flow path, and the opposite side is referred to as the downstream side.

As shown in FIG. 2 to FIG. 3B, a barrier wall 313 that partitions the flow path of exhaled air is integrally formed on the inner circumferential surface of the lip plate 31. The barrier wall 313 is formed in a wall shape that rises from the inner circumferential surface of the lip plate 31, and the tip end of this barrier wall 313 (the end portion on the back side in the perpendicular direction to the paper surface of FIG. 3B) is configured to contact the substrate 34. The first bent flow paths 314a and 314b and the second bent flow paths 315a and 315b are formed by the space surrounded by this barrier wall 313 and the substrate 34.

The first bent flow path 314a is a flow path that extends linearly from the upper air inlet 310 to one side in the axial direction of the air inlet side housing 32 (left side in FIG. 3B). From the downstream end portion (left side in FIG. 3B) of the first bent flow path 314a, the second bent flow path 315a bends perpendicularly (in the circumferential direction of the air inlet side housing 32), and the portion at the downstream side of this second bent flow path 315a is connected to one of the pair of housing side flow paths 323.

The first bent flow path 314b is a flow path that extends linearly from the lower air inlet 311 to the other side in the axial direction of the air inlet side housing 32 (right side in FIG. 3B). From the end portion at the downstream side (right side in FIG. 3B) of the first bent flow path 314b, the second bent flow path 315b bends perpendicularly (in the circumferential direction of the air inlet side housing 32 and in the same direction as the second bent flow path 315a), and the portion at the downstream side of this second bent flow path 315b is connected to the other housing side flow path 323.

Further, a restricted flow path 316a (see FIG. 3A) is formed at the boundary part between the first bent flow path 314a and the second bent flow path 315a, and a restricted flow path 316b is also formed at the boundary part between the first bent flow path 314b and the second bent flow path 315b. These restricted flow paths 316a and 316b are formed by restricted walls 317a and 317b that connect the walls of the barrier wall 313.

The restricted walls 317a and 317b are walls that extend to cross each bent flow path 314a, 314b, 315a, and 315b, and the erected height of the restricted walls 317a and 317b from the inner circumferential surface of the lip plate 31 is formed lower than the erected height of the barrier wall 313. By forming these restricted walls 317a and 317b, restricted flow paths 316a and 316b having a smaller flow path cross-sectional area than each bent flow path 314a, 314b, 315a, and 315b are formed.

As shown by arrow A in FIG. 3A and FIG. 3B, the exhaled air blown from the upper air inlet 310 is introduced into one housing side flow path 323 through the first bent flow path 314a, the restricted flow path 316a, and the second bent flow path 315a. On the other hand, as shown by arrow B, the exhaled air blown from the lower air inlet 311 is introduced into the other housing side flow path 323 through the first bent flow path 314b, the restricted flow path 316b, and the second bent flow path 315b.

Next, with reference to FIG. 3A to FIG. 4, the exhaled air flow path from the housing side flow paths 323 to the first exhaust port 334 will be described. FIG. 4 is a partially enlarged cross-sectional view of the air inlet unit 3 taken along line IV-IV in FIG. 3B. It is noted that the flow paths downstream of the housing side flow paths 323 are formed symmetrically between the sensor module Sa side and the sensor module Sb side. Thus, in the following description, the exhaled air flow path on the sensor module Sa side (see FIG. 4) will be described, and the description of the flow path on the sensor module Sb side will be omitted.

As shown in FIG. 3A to FIG. 4, a cylindrical lower protrusion 325 (see FIG. 4) is integrally formed on the inner circumferential surface on the opposite side from the bottom surface 322a of the mounting hole 322 of the air inlet side housing 32. A restricted flow path 326 connected to the housing side flow path 323 is formed on the inner circumferential side of the lower protrusion 325, and the case 35 of the sensor modules Sa and Sb is mounted to the lower protrusion 325.

The case 35 includes the above-described cylinder portion 350, a bottom wall portion 351 extending from the cylinder portion 350 to one side in the axial direction (left side in FIG. 4) of the air inlet unit 3, and a side wall portion 352 and an end wall portion 353 rising from the bottom wall portion 351, and these portions 350 to 353 are integrally formed. On the inner circumferential side of the cylinder portion 350, a fitting hole 354 into which the lower protrusion 325 is fitted and a case side flow path 355 connected to the fitting hole 354 are formed.

The fitting hole 354 and the case side flow path 355 are each formed with a circular cross-section. By forming the inner diameter of the case side flow path 355 smaller than the inner diameter of the fitting hole 354, a step is formed on the inner circumferential side of the cylinder portion 350, and the lower protrusion 325 is fitted into this step portion.

In the state where the cylinder portion 350 is mounted to the lower protrusion 325, the housing side flow path 323, the restricted flow path 326, and the case side flow path 355 form a flow path that extends linearly in the radial direction (substantially parallel to the blowing direction of exhaled air into each air inlet 310 and 311).

The exhaled air blown into the upper air inlet 310 (see FIG. 3A and FIG. 3B) is exhausted from the first exhaust port 334 through the above-described bent flow paths 314a and 315a (for the first bent flow path 314a, see FIG. 3A and FIG. 3B), the housing side flow path 323, the restricted flow path 326, and the case side flow path 355. Hereinafter, these flow paths 314a, 315a, 323, 326, and 355 will be collectively referred to and described as the "main flow path" of exhaled air.

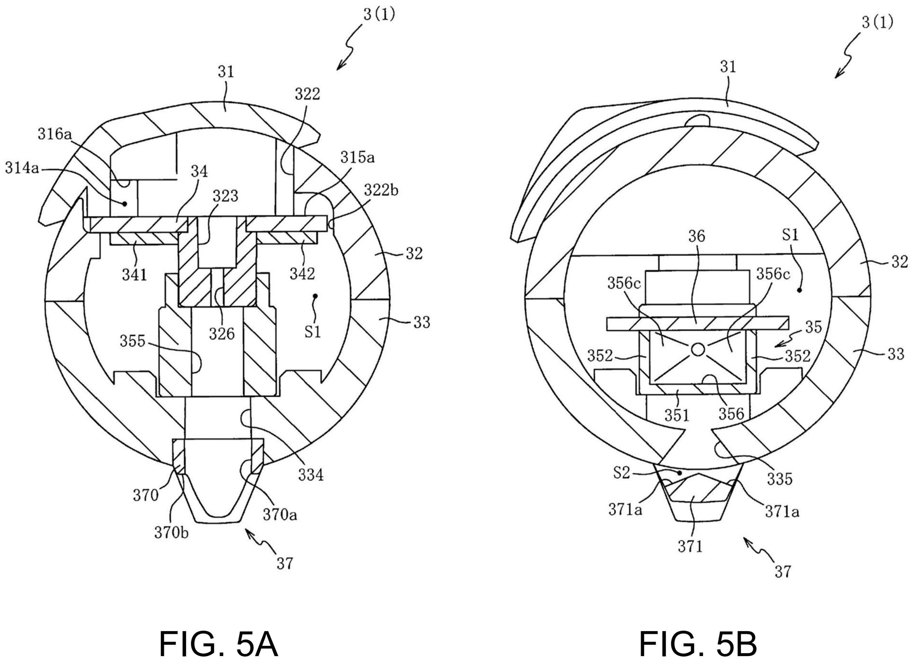

The bottom wall portion 351 of the case 35 is formed in a flat plate shape extending in the axial direction of the air inlet unit 3, and the side wall portions 352 are formed in a pair on two end sides in the width direction of the bottom wall portion 351 (perpendicular direction to the paper surface in FIG. 4) (see FIG. 5B). The end wall portion 353 is formed in a wall shape rising from the end portion in the axial direction of the bottom wall portion 351 (the end portion on the opposite side from the cylinder portion 350 side), and these wall portions 351 to 353 are formed in a box shape with one surface side (air inlet side housing 32 side) open. By closing this open part with the substrate 36, a branch flow path 356 surrounded by the substrate 36 and the wall portions 351 to 353 is formed inside the case 35.

The branch flow path 356 is a flow path extending in the axial direction of the air inlet unit 3, and in order to connect one end portion thereof to the main flow path (case side flow path 355), an opening 356a (first opening) of the branch flow path 356 is formed on the inner circumferential surface of the case side flow path 355. That is, the branch flow path 356 branches so as to intersect with the case side flow path 355. Further, the other end portion of the branch flow path 356 is connected to the outside of the case 35 through an opening 356b (second opening) formed in the end wall portion 353.

On the inner surface of the substrate 36 facing the branch flow path 356, a temperature sensor 360 and a heater 362 are arranged in the axial direction (longitudinal direction of the branch flow path 356). The temperature sensor 360 may use a known temperature sensor composed of a thermistor or the like, and the heater 362 may use a known heating element such as a chip resistor, so detailed description is omitted.

The air in the branch flow path 356 is heated by the heater 362, and the flow of the heated air (temperature change in the branch flow path 356) is detected by the temperature sensor 360. In the case of the case side flow path 355 side being the upstream side of the branch flow path 356, in this embodiment the temperature sensor 360 is disposed on the upstream side of the heater 362, but the temperature sensor 360 may be disposed on the downstream side of the heater 362. Further, the temperature sensor 360 and the heater 362 may be arranged side by side in the width direction (perpendicular direction to the paper surface in FIG. 4) orthogonal to the longitudinal direction of the branch flow path 356 (left-right direction in FIG. 4).

In the case of the flow rate (flow velocity) of exhaled air flowing in the main flow path (case side flow path 355) changing, changes also occur in the airflow generated in the branch flow path 356 (sub flow path branching from the main flow path), and changes in the airflow in this branch flow path 356 (temperature changes due to the flow of air heated by the heater 362) are detected by the temperature sensor 360. A musical sound signal based on the detection result of this temperature sensor 360 is generated by a sound source, and an electronic sound based on this musical sound signal is emitted from an amplifier, a speaker, or the like (neither of which is shown).

In order to accurately detect the flow rate of exhaled air flowing in the main flow path with the temperature sensor 360 based on such changes in airflow in the branch flow path 356, it is necessary to prevent saliva contained in the exhaled air and moisture generated by condensation of humidity contained in the exhaled air from remaining in the main flow path or the branch flow path 356. In particular, in a state where such moisture adheres to the temperature sensor 360, it becomes difficult to accurately detect the performer's exhaled air. A configuration that resolves these problems is described below.

The case side flow path 355 and the opening 356a of the branch flow path 356 are each formed with a circular cross-section, but the diameter of the opening 356a of the branch flow path 356 is formed smaller compared to the diameter of the case side flow path 355. That is, the cross-sectional area of the opening 356a of the branch flow path 356 is formed smaller compared to the cross-sectional area of the part (case side flow path 355) of the main flow path to which the opening 356a of the branch flow path 356 is connected. This provides an effect of making it difficult for exhaled air containing humidity to flow into the temperature sensor 360 side disposed in the branch flow path 356.

This may be attributed to the fact that since the opening 356a of the branch flow path 356 is formed relatively small, exhaled air passing through the case side flow path 355 becomes difficult to flow into the branch flow path 356 side. Further, as another factor, it is conceivable that negative pressure is generated in the branch flow path 356 by the exhaled air passing through the case side flow path 355, and the air in the branch flow path 356 is drawn from the opening 356a into the case side flow path 355 by that negative pressure.

By suppressing exhaled air containing humidity from flowing into the branch flow path 356 side, it is possible to suppress moisture generated by condensation or the like from adhering to the temperature sensor 360. Thus, the flow rate (flow velocity) of exhaled air flowing in the main flow path may be accurately detected by the temperature sensor 360 based on changes in airflow generated in the branch flow path 356.

Further, a cylindrical protrusion portion 357 whose tip end becomes the opening 356a of the branch flow path 356 is integrally formed on the inner circumferential surface of the case side flow path 355. By causing the opening 356a of the branch flow path 356 to protrude toward the inner circumferential side of the case side flow path 355 with this protrusion portion 357, it is considered that effects are obtained such that exhaled air containing humidity becomes difficult to flow into the branch flow path 356 side, and negative pressure becomes more likely to be generated in the branch flow path 356 by exhaled air passing through the main flow path.

Further, the tip end of the protrusion portion 357 (the edge of the opening 356a of the branch flow path 356) is disposed on an extension line of the flow path of the restricted flow path 326. That is, in a view of the inflow direction of exhaled air from the restricted flow path 326 to the case side flow path 355 (up-down direction view in FIG. 4), the restricted flow path 326 and the tip end of the protrusion portion 357 are disposed at overlapping positions. This is also considered to provide an effect that negative pressure becomes more likely to be generated in the branch flow path 356 by exhaled air passing through the main flow path.

Thus, this embodiment has a structure in which exhaled air flowing into the branch flow path 356 from the opening 356a having a relatively small cross-sectional area is detected by the temperature sensor 360, or a structure in which negative pressure is generated in the branch flow path 356 by exhaled air passing through the case side flow path 355, and the airflow in the branch flow path 356 generated by that negative pressure is detected by the temperature sensor 360. In the case of such a structure, changes in airflow generated in the branch flow path 356 become relatively small. Here, with a configuration that detects temperature changes of air in the branch flow path 356 heated by the heater 362 with the temperature sensor 360 as in this embodiment, slight changes in airflow that occur in the branch flow path 356 may be detected by the temperature sensor 360. Thus, the flow rate of exhaled air flowing in the main flow path may be detected with high accuracy.

Further, since the sensor modules Sa and Sb are arranged in the axial direction with the cylinder portions 350 facing each other (see FIG. 2), and the branch flow path 356 is formed along the axial direction (longitudinal direction) of the air inlet unit 3, the branch flow path 356 for sensing exhaled air may be formed long. This enables each cylinder portion 350 to be positioned close to the lip plate 31 and the air inlet unit 3 to simulate the appearance of an elongated flute (head joint), while allowing changes in airflow within the branch flow path 356 to be accurately detected by the temperature sensor 360.

Further, in this embodiment, exhaled air blown into the upper air inlet 310 and exhaled air blown into the lower air inlet 311 are detected by separate sensor modules Sa and Sb (see FIG. 2). That is, instead of forming two branch flow paths 356 in one case 35, the configuration uses two cases 35 as separate components (making the cases 35 compact) to individually form branch flow paths 356, so the shape of the branch flow paths 356 may be formed with high accuracy. Thus, airflow generated in the branch flow paths 356 may be accurately detected by the temperature sensors 360.

Thus, in this embodiment, exhaled air is detected based on airflow generated in the branch flow path 356, and a tapered surface 356c for stabilizing this airflow is formed in the branch flow path 356. The tapered surface 356c is an inclined surface connected to one end (the end portion on the opening 356a side) of the inner surface of the bottom wall portion 351 or side wall portion 352 of the case 35 (regarding the point where the tapered surface 356c is connected to the side wall portion 352, see FIG. 5B). By forming such a tapered surface 356c, the cross-sectional area of the branch flow path 356 may be gradually reduced toward the opening 356a side. This may suppress the occurrence of irregular airflow (turbulent flow) within the branch flow path 356, so the flow rate of exhaled air flowing in the main flow path may be accurately detected by the temperature sensor 360.

Further, a ventilation opening 333c is formed on the side surface of the boss 333 that faces the end wall portion 353 of the case 35, and the recess portion 333b formed on the outer circumferential surface of the exhaust side housing 33 by the boss 333 is connected to the opening 356b of the branch flow path 356 via the ventilation opening 333c. This enables ventilation of the interior of the branch flow path 356 by airflow passing through the ventilation opening 333c and the opening 356b, so condensation on the temperature sensor 360 may be suppressed.

Further, by utilizing the boss 333 (recess portion 333b) for fixing the sensor modules Sa and Sb to ventilate the branch flow path 356, it becomes unnecessary to separately provide holes or indentations in the exhaust side housing 33 for performing such ventilation. Thus, the number of holes and indentations formed in the exhaust side housing 33 may be reduced, so the appearance of the electronic wind instrument 1 may be improved.

Here, for example, in the case of a performer taking a breath during performance, air may be drawn in from the upper air inlet 310 (see FIG. 3A and FIG. 3B). Further, for example, in the case of a performer performing an action with their mouth separated from the upper air inlet 310, outside air may flow in from the upper air inlet 310 due to the accompanying movement of the electronic wind instrument 1. In response to the temperature sensor 360 detecting airflow accompanying such intake air or inflow of outside air, a problem arises where musical sounds unintended by the performer are generated.

Further, in the case of a performer strongly blowing exhaled air into the upper air inlet 310, the flow rate of that exhaled air may exceed the measurable range of the temperature sensor 360. Outside such measurement range of the temperature sensor 360, even if the flow rate of exhaled air is changed, no change occurs in the generated musical sound, so a problem arises where musical sounds intended by the performer become difficult to generate.

In contrast, in this embodiment, as described above, the lip plate 31 is formed with the first bent flow path 314a (see FIG. 3A and FIG. 3B) that extends in a direction orthogonal to the blowing direction of exhaled air into the upper air inlet 310 (in this embodiment, in the axial direction of the air inlet unit 3). Furthermore, the second bent flow path 315a connected to the downstream side of the first bent flow path 314a extends in a direction that further bends from the connection portion (in this embodiment, a direction orthogonal to both the blowing direction of exhaled air and the axial direction of the air inlet unit 3).

By forming such bent flow paths on the upstream side of the main flow path, compared to a case where the upper air inlet 310 and the housing side flow path 323 are connected in a straight line, for example, even if the above-mentioned intake air by the performer or inflow of outside air occurs, generation of accompanying airflow in the case side flow path 355 may be suppressed.

Further, at the boundary parts of these bent flow paths 314a and 315a, a restricted flow path 316a (see FIG. 3A) having a smaller flow path cross-sectional area than each of the bent flow paths 314a and 315a is formed. Furthermore, a restricted flow path 326 having a smaller flow path cross-sectional area than each of those flow paths 323 and 355 is also formed between the housing side flow path 323 and the case side flow path 355. By providing such restricted parts where the cross-sectional area of the main flow path is partially reduced in the middle of the main flow path (upstream side of the connection portion of the branch flow path 356), generation of airflow accompanying the above-mentioned intake air by the performer or inflow of outside air in the case side flow path 355 may also be suppressed.

By suppressing generation of airflow accompanying intake air by the performer or inflow of outside air in the case side flow path 355, erroneous detection of that airflow by the temperature sensor 360 may be suppressed. Thus, generation of musical sounds unintended by the performer may be suppressed.

Further, by adjusting the flow path length of each bent flow path 314a and 315a, or by adjusting the flow path cross-sectional area of the restricted flow paths 316a and 326, it is possible to suppress exhaled air that the performer strongly blows into the upper air inlet 310 from exceeding the measurable range of the temperature sensor 360. Thus, musical sounds intended by the performer become easier to generate.

In this way, by providing bent parts and restricted parts in the main flow path, musical sounds intended by the performer become easier to generate. However, if the path of the main flow path is formed in a complex manner, saliva contained in exhaled air and moisture generated by condensation tend to remain in the main flow path. If this moisture blocks, for example, the restricted flow path 326 or the opening 356a of the branch flow path 356, it becomes difficult to detect exhaled air blown from each air inlet 310 and 311 with the temperature sensor 360.

Thus, in this embodiment, a configuration is adopted in which moisture is dried by heating the part on the upstream side of the main flow path with the substrate 34 (prevent condensation from occurring). This configuration will be described with reference to FIG. 4 to FIG. 5B.

FIG. 5A is a cross-sectional view of the air inlet unit 3 taken along line Va-Va in FIG. 4, and FIG. 5B is a cross-sectional view of the air inlet unit 3 taken along line Vb-Vb in FIG. 4.

As shown in FIG. 4 to FIG. 5B, the substrate 34 has a heater 341 and a sensor 342 (both refer to FIG. 5A). The heater 341 may use a known heating element such as a chip resistor, and the sensor 342 may use a known temperature sensor composed of a thermistor or the like, so detailed description is omitted.

The temperature of the substrate 34 accompanying heating by the heater 341 is detected by the sensor 342, and is controlled so that the heater 341 repeats on/off (or the temperature of the heater 341 changes) based on the detection result of the sensor 342. Through control over this heater 341, the temperature of the substrate 34 is maintained at around 30°C to 35°C.

By heating the substrate 34 that constitutes the bottom surface of each bent flow path 314a and 315a with the heater 341, saliva adhering to each bent flow path 314a and 315a may be dried and moisture due to condensation in each bent flow path 314a and 315a may be suppressed from occurring.

Further, by heating the substrate 34 with the heater 341, the housing side flow path 323 connected to the second bent flow path 315a and the restricted flow path 326 positioned on the downstream side of the housing side flow path 323 may also be heated. Thus, saliva adhering to the housing side flow path 323 and the restricted flow path 326 may be dried, and moisture due to condensation may be suppressed from occurring in the housing side flow path 323 and the restricted flow path 326.

By suppressing moisture from remaining in the restricted flow path 326 and in the main flow path upstream of the opening 356a of the branch flow path 356 (see FIG. 4), the moisture may be suppressed from flowing down to the downstream side of the main flow path together with exhaled air. This may suppress the restricted flow path 326 and the opening 356a of the branch flow path 356 from being blocked by moisture, so exhaled air flowing in the main flow path may be accurately detected by the temperature sensor 360 (see FIG. 4).

Here, in this embodiment, exhaled air flowing in the main flow path is mainly exhausted from the first exhaust port 334, but a portion of the exhaled air is configured to be introduced into the internal space S1 of each housing 32 and 33 through the leak flow path 322b (see FIG. 5A).

More specifically, the housing side flow path 323 opens in the middle of the second bent flow path 315a, and in the mounting hole 322 where the lip plate 31 is mounted, a leak flow path 322b (see FIG. 5A) is formed that connects the end portion on the downstream side of the second bent flow path 315a to the internal space S1 side of each housing 32 and 33. This leak flow path 322b is formed by a gap between the edge of the substrate 34 in the circumferential direction of the air inlet side housing 32 and the inner circumferential surface of the air inlet side housing 32.

By forming such a leak flow path 322b that branches from the main flow path, a portion of the airflow generated in the second bent flow path 315a may be introduced to the internal space S1 side of the air inlet unit 3 (i.e., a portion of the airflow may be discharged to the outside of the main flow path). This may suppress the generation of airflow in the case side flow path 355 due to the performer's inhalation or inflow of outside air as described above, so erroneous detection of such airflow by the temperature sensor 360 (see FIG. 4) may be suppressed. Thus, generation of musical sounds unintended by the performer may be suppressed.

Further, by adjusting the flow path cross-sectional area of the leak flow path 322b, it is possible to suppress exhaled air that the performer strongly blows into the upper air inlet 310 from exceeding the measurable range of the temperature sensor 360. Thus, musical sounds intended by the performer become easier to generate.

Exhaled air that flows into the internal space S1 side of each housing 32 and 33 from the leak flow path 322b is exhausted from the second exhaust port 335 (see FIG. 5B) that penetrates the exhaust side housing 33. The second covering portion 371 of the decorative body 37 that covers the second exhaust port 335 is formed to be bridged between the first covering portion 370 and the third covering portion 372 (to extend in the axial direction) (see FIG. 4), and a cavity S2 (see FIG. 5B) is formed between the exhaust side housing 33 (second exhaust port 335) and the second covering portion 371.

This may suppress the second exhaust port 335 from being blocked by the placement surface even in the case of the electronic wind instrument 1 being placed on a table or the like, and ventilation through the cavity S2 and the second exhaust port 335 may be ensured. Thus, even with a structure that leaks a portion of exhaled air to the internal space S1 of each housing 32 and 33 through the leak flow path 322b (see FIG. 5A), condensation on components of each housing 32 and 33 (e.g., the substrate 36 shown in FIG. 5B) may be suppressed.

Further, on the inner circumferential surface of the second covering portion 371 that faces the second exhaust port 335, a pair of inclined surfaces 371a (see FIG. 5B) arranged in the circumferential direction are formed. The pair of inclined surfaces 371a are flat surfaces that incline away from the exhaust side housing 33 (second exhaust port 335) from the apex at the center side in the circumferential direction (ridge line where they intersect each other) toward the end portions on the outer side in the circumferential direction. By forming such mountain-shaped inclined surfaces 371a, the flow velocity of air passing through the cavity S2 along the circumferential direction (left-right direction in FIG. 5B) rises due to the inclined surfaces 371a. This rise in the flow velocity of air generates negative pressure in the internal space S1 of each housing 32 and 33, and the negative pressure may exhaust air in the internal space S1 from the second exhaust port 335 to the outside.

Further, since the opening dimension of the second exhaust port 335 in the circumferential direction gradually increases from the internal space S1 toward the outer circumferential surface of the exhaust side housing 33, air in the internal space S1 is easily exhausted from the second exhaust port 335 to the outside by the airflow passing through the cavity S2 as described above. This may suppress condensation on components of each housing 32 and 33 even with a structure that leaks a portion of exhaled air to the internal space S1 of each housing 32 and 33 through the leak flow path 322b (see FIG. 5A).

Further, as described above, through holes 370a and 372a (for the through hole 372a, see FIG. 4) are formed in each covering portion 370 and 372 of the decorative body 37 that covers the first exhaust port 334 and the recess portion 333b (ventilation opening 333c) of the boss 333 (see FIG. 4). For example, a depression 370b is formed at the edges on two sides in the circumferential direction of the through hole 370a. Further, a similar depression 372b is formed at the edges of the through hole 372a shown in FIG. 4.

By forming such depressions 370b and 372b in the through holes 370a and 372a, the first exhaust port 334 and the recess portion 333b (ventilation opening 333c) may be suppressed from being blocked by the placement surface even in the case of the electronic wind instrument 1 being placed on a table or the like. Thus, ventilation through the first exhaust port 334 and the recess portion 333b (ventilation opening 333c) may be ensured.

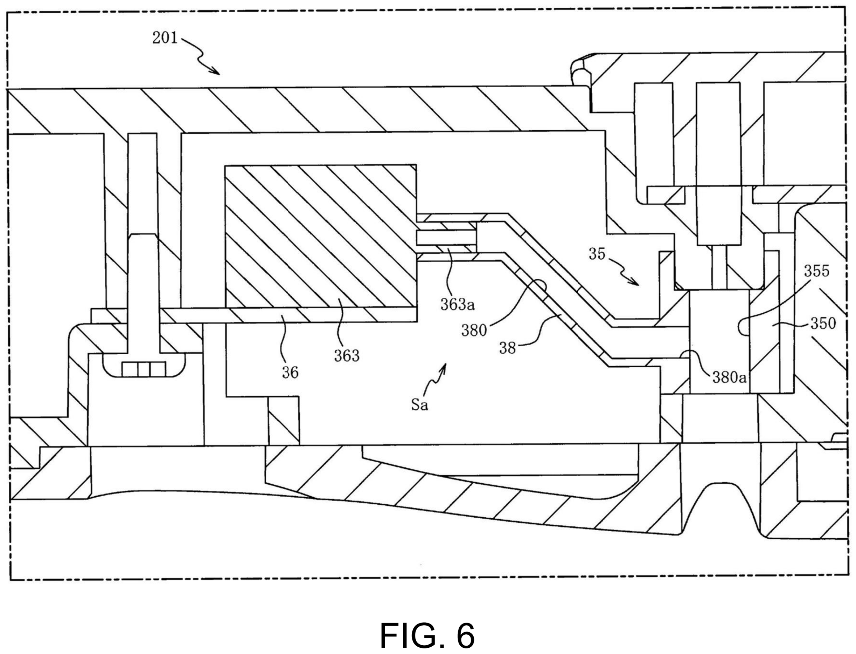

Next, the electronic wind instrument 201 of the second embodiment will be described with reference to FIG. 6. In the first embodiment, the case of detecting temperature change of air in the branch flow path 356 heated by the heater 362 with the temperature sensor 360 was described, but in the second embodiment, the case of detecting change in airflow (air pressure) in the branch flow path 380 using the pressure sensor 363 will be described. It is noted that the same reference numerals are assigned to the same portions as in the above-described first embodiment, and description thereof will be omitted.

As shown in FIG. 6, the sensor module Sa of the electronic wind instrument 201 of the second embodiment has a pressure sensor 363 instead of the temperature sensor 360 and heater 362 (see FIG. 4) described in the first embodiment, and a cylindrical conduit 38 is disposed instead of each wall portion 351 to 353 (see FIG. 4) of the case 35. The pressure sensor 363 is a sensor that detects changes in air pressure, and since a known configuration may be adopted, detailed description will be omitted.

The pressure sensor 363 is mounted on the upper surface of the substrate 36, and the pressure sensor 363 is formed with a cylindrical connection port 363a. One end of the conduit 38 is connected to the connection port 363a, and the other end of the conduit 38 is connected to the cylinder portion 350 of the case 35. It is noted that the conduit 38 may be formed integrally with the case 35 (cylinder portion 350), or may be a separate pipe from the case 35 (e.g., a flexible tube).

The cavity inside the conduit 38 is configured as a branch flow path 380, and an opening 380a of this branch flow path 380 is formed on the inner circumferential surface of the cylinder portion 350 (case side flow path 355). That is, also in this embodiment, the branch flow path 380 branches so as to intersect with the case side flow path 355. In response to a change in the flow rate (flow velocity) of exhaled air flowing in the main flow path (case side flow path 355), a change also occurs in the airflow generated in the branch flow path 380 (sub flow path branching from the main flow path), and this change in airflow (air pressure) in the branch flow path 380 is detected by the pressure sensor 363.

Also in this embodiment, the cross-sectional area of the opening 380a of the branch flow path 380 is formed smaller than the cross-sectional area of the part (case side flow path 355) where the opening 380a of the branch flow path 380 is connected in the main flow path. This provides an effect that exhaled air containing moisture becomes difficult to flow into the pressure sensor 363 side. Factors for obtaining this effect include that exhaled air passing through the case side flow path 355 becomes difficult to flow into the branch flow path 380 side, and that negative pressure is generated in the branch flow path 380 by exhaled air passing through the case side flow path 355, and air in the branch flow path 380 is sucked from the opening 380a into the case side flow path 355 by the negative pressure.

The above description has been made based on the above embodiments, but the disclosure is not limited to the above embodiments in any way, and it can be easily inferred that various improvements and modifications are possible within the scope that does not depart from the spirit of the disclosure.

In each of the above embodiments, the case where the electronic wind instruments 1 and 201 are electronic musical instruments that imitate a flute has been described, but the disclosure is not necessarily limited thereto. For example, the electronic wind instruments 1 and 201 may imitate other wind instruments (saxophone, clarinet, recorder, hulusi, etc.).

In each of the above embodiments, the configuration in which each bent flow path 314a and 315a is heated by the heater 341, that is, the configuration in which the substrate 34 is positioned on the bottom surface 322a of the mounting hole 322 of the lip plate 31, has been described, but the disclosure is not necessarily limited thereto. For example, the substrate 34 (heater 341) may be positioned on the inner circumferential surface of the air inlet side housing 32 on the opposite side from the bottom surface 322a, or the substrate 34 (heater 341) may be omitted. Further, a substrate (heater) for heating the case side flow path 355 may be disposed.

In each of the above embodiments, the case where the main flow path is composed of the first bent flow path 314a, the second bent flow path 315a, the housing side flow path 323, the restricted flow path 326, and the case side flow path 355 has been described, but the disclosure is not necessarily limited thereto. For example, among the connection portions of the respective flow paths 314a, 315a, 323, 326, and 355, another flow path may be added to some or all of the connection portions, or a portion of each flow path 314a, 315a, 323, 326, and 355 may be bent. That is, the shape of the main flow path connecting from each air inlet 310 and 311 to the first exhaust port 334 may be arbitrarily changed, and the disclosure may be applied to any electronic wind instrument that includes at least a branch flow path that branches so as to intersect with the main flow path.

In each of the above embodiments, the case where the case side flow path 355, which is a portion of the main flow path, is formed by the case 35 of the sensor modules Sa and Sb (the sensor modules Sa and Sb include a portion of the main flow path) has been described, but the disclosure is not necessarily limited thereto. For example, in addition to the case side flow path 355, the sensor modules Sa and Sb may include some or all of the first bent flow path 314a, the second bent flow path 315a, the housing side flow path 323, and the restricted flow path 326. That is, portions of the lip plate 31, the air inlet side housing 32 (e.g., the mounting hole 322 and the lower protrusion 325), and a portion or all of the substrate 34 that form the main flow path may be used as components of the sensor modules Sa and Sb.

In each of the above embodiments, the case where the first bent flow paths 314a and 314b and the second bent flow paths 315a and 315b are formed in the lip plate 31 has been described, but the disclosure is not necessarily limited thereto. For example, either one of the first bent flow paths 314a and 314b and the second bent flow paths 315a and 315b may be omitted, and each air inlet 310 and 311 and the housing side flow path 323 may be connected via the other bent flow path. Further, both the first bent flow paths 314a and 314b and the second bent flow paths 315a and 315b may be omitted, and each air inlet 310 and 311 and the housing side flow path 323 may be connected linearly.

In each of the above embodiments, the case where the restricted flow paths 316a and 326 are formed in the middle of each bent flow path 314a and 315a or between the housing side flow path 323 and the case side flow path 355 (i.e., in the main flow path upstream of the branch flow path) has been described, but the disclosure is not necessarily limited thereto. For example, either one or both of the restricted flow paths 316a and 326 may be omitted, or a restricted flow path may be formed in the case side flow path 355 (i.e., in the case 35).

In each of the above embodiments, the case where the leak flow path 322b is formed in the second bent flow path 315a (the main flow path upstream of the branch flow path) has been described, but the disclosure is not necessarily limited thereto. For example, a configuration that omits the leak flow path 322b (sealing the gap between the substrate 34 and the air inlet side housing 32) may be used, or a flow path corresponding to the leak flow path 322b may be formed in other parts of the main flow path.

In each of the above embodiments, the case where the first and second exhaust ports 334 and 335 are formed in the exhaust side housing 33 has been described, but the disclosure is not necessarily limited thereto. For example, an exhaust port corresponding to the first exhaust port 334 (i.e., an exhaust port that exhausts exhaled air from the main flow path) may be formed in the air inlet side housing 32, or an exhaust port for ventilating the internal space S1 of each housing 32 and 33 may be formed in the air inlet side housing 32 by omitting the second exhaust port 335 (or in addition to the second exhaust port).

In each of the above embodiments, the case where the opening dimension in the circumferential direction of the second exhaust port 335 expands toward the outer circumferential side has been described, but the disclosure is not necessarily limited thereto. For example, the opening dimension in the circumferential direction of the second exhaust port 335 may be constant from the inner circumferential side to the outer circumferential side, or may narrow from the inner circumferential side to the outer circumferential side.

In each of the above embodiments, the case where each exhaust port 334 and 335 and the recess portion 333b are covered by the decorative body 37 in which the first to third covering portions 370 to 372 are integrally formed has been described, but the disclosure is not necessarily limited thereto. For example, the first to third covering portions 370 to 372 may be formed separately, or part or all of the first to third covering portions 370 to 372 may be omitted.

In each of the above embodiments, the case where the second exhaust port 335 is covered by the second covering portion 371 extending in the axial direction has been described, but the disclosure is not necessarily limited thereto. For example, similar to the first covering portion 370 and the third covering portion 372, the second exhaust port 335 may be covered with a covering portion having a through hole penetrating in the radial direction, or the first exhaust port 334 and the recess portion 333b may be covered by a covering portion extending in the axial direction.

In each of the above embodiments, the case where a pair of inclined surfaces 371a are formed on the inner circumferential surface of the second covering portion 371 so as to be arranged via a ridge line has been described, but the disclosure is not necessarily limited thereto. For example, a flat surface or a curved surface may be formed at the boundary part between the pair of inclined surfaces 371a, or the inner circumferential surface of the second covering portion 371 may be a flat surface.

In each of the above embodiments, bolts are used to fix the members constituting the electronic wind instrument 1 to each other, but other screw parts or fastening parts may be used.

In the first embodiment described above, the case where the protrusion portion 357 is formed on the inner circumferential surface of the case side flow path 355 (main flow path) has been described, but the disclosure is not necessarily limited thereto. For example, the protrusion portion 357 may be omitted, and the opening 356a of the branch flow path 356 may be formed on the inner circumferential surface of the case side flow path 355. Further, the protrusion portion 357 connected to the conduit 38 (branch flow path 380) may be formed on the inner circumferential surface of the case side flow path 355 of the second embodiment.

In the first embodiment described above, the case where the tapered surface 356c is formed in the branch flow path 356 has been described, but the disclosure is not necessarily limited thereto. For example, the tapered surface 356c may be omitted and the cross-sectional area of the branch flow path 356 may be constant over two ends in the axial direction, or a surface similar to the tapered surface 356c may be formed on the opening 356b side.

In the first embodiment described above, the case where the ventilation opening 333c that connects the opening 356b of the branch flow path 356 to the outside is formed in the boss 333 (recess portion 333b) has been described, but the disclosure is not necessarily limited thereto. For example, the opening 356b of the branch flow path 356 may be connected to the outside via a ventilation opening (exhaust port) formed in a part separate from the boss 333 (recess portion 333b).

### Reference Signs List

- 1: electronic wind instrument
- 32: air inlet side housing (housing)
- 33: exhaust side housing (housing)
- 310: upper air inlet (air inlet)
- 311: lower air inlet (air inlet)
- 314a, 314b: first bent flow path (portion of main flow path)
- 315a, 315b: second bent flow path (portion of main flow path)
- 316a, 316b: restricted flow path (portion of main flow path)
- 322b: leak flow path
- 323: housing side flow path (portion of main flow path)
- 326: restricted flow path (portion of main flow path)
- 333b: recess portion
- 334: first exhaust port (exhaust port)
- 335: second exhaust port (exhaust port)
- 355: case side flow path (portion of main flow path)
- 356, 380: branch flow path
- 356a, 380a: opening (first opening)
- 356b: opening (second opening)
- 357: protrusion portion
- 360: temperature sensor (sensor)
- 362: heater
- 363: pressure sensor (sensor)
- B3: bolt (fastening member)
- Sa, Sb: sensor module

## Claims

1. A sensor module (Sa, Sb) for electronic wind instrument (1, 201), comprising:
a main flow path (314a, 315a, 323, 326, 355) positioned between an air inlet (310, 311) and an exhaust port (334, 335) for exhaled air formed on an outer surface of a housing (32, 33) of an electronic wind instrument (1, 201);
a branch flow path (356, 380) branching to intersect with the main flow path; and
a sensor (360, 363) positioned in the branch flow path and detecting changes in airflow in the branch flow path caused by changes in exhaled air flowing in the main flow path,
wherein a cross-sectional area of a first opening (356a, 380a) of the branch flow path formed at a connection portion between the main flow path and the branch flow path is smaller than a cross-sectional area of the main flow path at the connection portion.

2. The sensor module for electronic wind instrument according to claim 1, wherein a protrusion portion (357) that protrudes toward an inner circumferential side of the main flow path is formed on an inner circumferential surface of the main flow path, and
the first opening is formed on a tip end side of the protrusion portion.

3. The sensor module for electronic wind instrument according to claim 2, wherein the main flow path comprises a restricted flow path (316a, 316b, 326) that is formed on an upstream side of the connection portion and where a cross-sectional area of the main flow path is partially reduced, and
a tip end of the protrusion portion is positioned on an extension line of the restricted flow path.

4. The sensor module for electronic wind instrument according to any of claims 1 to 3, comprising a heater (362) that is positioned in the branch flow path,
wherein the sensor detects a temperature change in the branch flow path heated by the heater.

5. The sensor module for electronic wind instrument according to claim 4, wherein a cross-sectional area of the branch flow path is gradually reduced from a sensor side toward a first opening side.

6. An electronic wind instrument (1, 201), comprising:
a housing (32, 33) having an air inlet (310, 311) and an exhaust port (334, 335) for exhaled air formed on an outer surface,
wherein the sensor module according to any of claims 1 to 5 is positioned in the housing.

7. The electronic wind instrument according to claim 6, wherein a recess portion (333b) for fastening a fastening member (B3) is formed on the outer surface of the housing, and
a second opening (356b) of the branch flow path is formed on an inner circumferential side of the recess portion.

8. The electronic wind instrument according to claim 6 or 7, wherein the main flow path comprises a restricted flow path (316a, 316b, 326) that is formed on an upstream side of the connection portion and where a cross-sectional area of the main flow path is partially reduced.

9. The electronic wind instrument according to any of claims 6 to 8, wherein the main flow path comprises a bent flow path (314a, 314b, 315a, 315b) that is formed on an upstream side of the connection portion and bends with respect to a blowing direction of exhaled air into the air inlet.

10. The electronic wind instrument according to any of claims 6 to 9, comprising a leak flow path (322b) that branches from the main flow path on an upstream side of the connection portion,
wherein a portion of exhaled air flowing in the main flow path is introduced into the housing through the leak flow path.

11. The electronic wind instrument according to claim 10, wherein the exhaust port comprises at least a first exhaust port (334) for exhausting exhaled air flowing on a downstream side of the connection portion to outside of the housing, and a second exhaust port (335) for exhausting exhaled air introduced into the housing from the leak flow path to outside of the housing.

12. A detection method for exhaled air in an electronic wind instrument (1, 201), which comprises a housing (32, 33) having an air inlet (310, 311) and an exhaust port (334, 335) for exhaled air formed on an outer surface, a main flow path (314a, 315a, 323, 326, 355) positioned between the air inlet and the exhaust port of the housing, a branch flow path (356, 380) branching to intersect with the main flow path, and a sensor (360, 363) positioned in the branch flow path, the detection method for exhaled air comprising:
setting a cross-sectional area of a first opening (356a, 380a) of the branch flow path formed at a connection portion between the main flow path and the branch flow path to be smaller than a cross-sectional area of the main flow path at the connection portion; and
detecting, by the sensor, changes in airflow in the branch flow path caused by changes in exhaled air flowing in the main flow path.

13. The detection method for exhaled air in the electronic wind instrument of claim 12, wherein the sensor is a temperature sensor.

14. The detection method for exhaled air in the electronic wind instrument of claim 13, wherein a heater is further positioned in the branch flow path,
wherein the sensor detects a temperature change in the branch flow path heated by the heater.

15. The detection method for exhaled air in the electronic wind instrument of claim 12, wherein the sensor is a pressure sensor.
